# EUROPÄISCHE PATENTSCHRIFT

(11) **EP 1 252 203 B1**
(45) Veröffentlichungstag und Bekanntmachung des Hinweises auf die Patenterteilung: **17.03.2004**
(21) Anmeldenummer: 00985177.5
(22) Anmeldetag: 15.12.2000
(51) Int. Cl.: C08F 12/32

(54) **VERFAHREN ZUR HERSTELLUNG EINES POLYMEREN UMSETZUNGSPRODUKTS**
METHOD FOR PRODUCING A POLYMERIC CONVERSION PRODUCT
PROCEDE DE PREPARATION D'UN PRODUIT DE REACTION POLYMERE

(30) Priorität: 17.12.1999 DE 19961063
(43) Veröffentlichungstag der Anmeldung: 30.10.2002
(73) Patentinhaber: BASF AKTIENGESELLSCHAFT, 67056 Ludwigshafen (DE)
(72) Erfinder: RAETHER, Roman, Benedikt, 67117 Limburgerhof (DE); MODERY, Bernd, 76879 Hochstadt (DE); BRAUN, Frank, 67150 Niederkirchen (DE); BRINKMANN-RENGEL, Susanne, 55270 Ober-Olm (DE); CHRISTIE, David, 35-01 Suntec Tower One (US); HAREMZA, Sylke, 69151 Neckargemünd (DE)
(74) Vertreter: Isenbruck, Günter, Dr.
(86) Internationale Anmeldenummer: PCT/EP2000/012848
(87) Internationale Veröffentlichungsnummer: WO 2001/044327

(56) Entgegenhaltungen:
- DE-A- 4 420 917
- DE-A- 19 858 708

## Beschreibung

Die vorliegende Erfindung betrifft ein Verfahren zur Herstellung eines Umsetzungsprodukts (A) durch Reaktion unter radikalischen Bedingungen mindestens eines radikalisch polymerisierbaren Monomeren (a) in Gegenwart mindestens eines radikalischen Initiators sowie einer Verbindung (I), wie nachstehend definiert, dieses Umsetzungsprodukt an sich, ein Verfahren zur Herstellung eines Polymers unter Verwendung dieses Umsetzungsprodukts, sowie deren Verwendung als Makroinitiator.

Die vorliegende Erfindung liegt auf dem technischen Gebiet der radikalischen Polymerisation, die Merkmale aufweist, die typisch für ein lebendes Polymerisationssystem sind, wobei das erfindungsgemäße Verfahren prinzipiell in der Lage ist, Umsetzungsprodukte bzw. Polymere bereit zu stellen, die eine enge Molekulargewichtsverteilung (M_{w}/Mₙ) aufweisen können. Darüber hinaus können durch entsprechende Auswahl an Monomeren und ggf. aufeinanderfolgende Zugabe von verschiedenen Monomeren sowohl unverzweigte als auch verzweigte Homo- und Copolymere sowie Blockcopolymere hergestellt werden. Dabei betrifft die vorliegende Erfindung neben den Polymeren an sich auch ein in einer ersten Stufe erhaltenes Umsetzungsprodukt.

Seit einigen Jahren besteht ein starkes Interesse an Verfahren bzw. Verfahrenskonzepten, die sich zur Herstellung einer Vielzahl von Polymeren eignen und es ermöglichen, derartige Polymere mit vorbestimmter Struktur, Molekulargewicht und Molekulargewichtsverteilung bereit zu stellen.

So beschreibt die WO 98/01478 ein Verfahren zur Herstellung von Polymeren, bei dem das umzusetzende Monomer, das insbesondere unter Vinylmonomeren und ungesättigte Gruppen aufweisenden Säurederivaten, wie z.B. Anhydride, Ester und Imide der (Meth)acrylsäure ausgewählt wird, in Gegenwart eines radikalischen Starters und einer Thiocarbonylthio-Verbindung als Kettenübertragungsmittel umgesetzt wird.

Die WO 92/13903 beschreibt ein Verfahren zur Herstellung von Polymeren mit einem niedrigen Molekulargewicht durch Radikalkettenpolymerisation von einem oder mehreren Monomeren in Gegenwart eines Gruppenübertragungsmittels, wie darin definiert, das eine C-S-Doppelbindung aufweist. Ausweislich dieser Druckschrift wirken die dort beschriebenen, eine C-S-Doppelbindung aufweisenden Verbindungen nicht nur als Kettenübertragungsmittel, sondern auch als Wachstumsregler, so daß es gemäß dieser Druckschrift lediglich möglich ist, in Gegenwart dieser Verbindung Polymere mit niedrigem Molekulargewicht herzustellen.

Ein Verfahren zur Radikalkettenpolymerisation ungesättigter Monomere in wäßrigem Medium und in Anwesenheit eines Makromonomeren mit einer -CH₂-C(X)=CH₂-Endgruppe, in der X wie darin definiert ist, wird in der WO 93/22351 beschrieben. Ausweislich der Beispiele dieser Anmeldung werden dort jeweils verschiedene (Meth)acrylate bzw. (Meth)acrylsäure und ggf. Monomere wie Styrol unter Emulsionsoder Suspensionspolymerisations-Bedingungen umgesetzt.
Die WO 93/22355 betrifft ein Verfahren zur Herstellung vernetzbarer Polymerer unter Verwendung eines Makromonomeren wie in der WO 93/22351 beschrieben.

Die WO 96/15157 beschreibt ebenfalls ein Verfahren zur Herstellung von Polymeren mit vergleichsweise enger Molekulargewichtsverteilung, in dem ein Vinylmonomeres, wie darin definiert, mit einem ebenfalls Vinyl-terminierten Makromonomeren in Anwesenheit eines radikalischen Initiators umgesetzt wird.

Ferner betrifft die WO 98/37104 die Herstellung von bzgl. des Molekulargewichts kontrollierten Polymeren, u.a. solchen auf Acrylat-Basis, durch radikalische Polymerisation von entsprechenden Monomeren unter Verwendung eines darin näher definierten Kettenübertragungsmittels mit einer C-C-Doppelbindung und Resten, die diese Doppelbindung bzgl. der radikalischen Anlagerung von Monomeren aktivieren.

Eine Radikalkettenpolymerisation bzw. -copolymerisation mit einem ω-ungesättigten Oligo(methylmethacrylat) mit Ethylacrylat, Styrol, Methylmethacrylat, Acrylnitril und Vinylacetat als Copolymere wird in einem wissenschaftlichen Artikel in J. Macromol. Sci.-Chem., A 23 (7), 839-852 (1986) beschrieben.

In Anbetracht dieses Standes der Technik lag die Aufgabe der vorliegenden Erfindung darin, ein neues Verfahren zur Herstellung eines polymeren Umsetzungsprodukts bereit zu stellen, das auf einfache und kontrollierte Weise zu radikalisch herstellbaren Homo- und Copolymeren führt. Eine weitere Aufgabe der Erfindung lag darin ein Verfahren zur Verfügung zu stellen, mit dessen Hilfe Blockcopolymere hergestellt werden können, die auf andere Weise nicht oder nur unbefriedigend zu erhalten sind. Ferner lag der vorliegenden Erfindung die Aufgabe zugrunde, eine gezielte Einstellung von Eigenschaften von Polymeren und dadurch eine vielseitige Einsatzmöglichkeit solcher Polymere, die erhältlich sind durch einfache radikalische Polymerisation, zu ermöglichen.

Diese und weitere Aufgaben werden durch das erfindungsgemäße Verfahren wie es nachstehend beschrieben wird, gelöst.

Gegenstand der Erfindung ist daher ein Verfahren zur Herstellung eines Umsetzungsprodukts (A), das die folgende Stufe (i) umfaßt:
(i) Reaktion unter radikalischen Bedingungen eines Reaktionsgemischs, umfassend
   - mindestens ein radikalisch polymerisierbares Monomeres (a),
   - mindestens einen radikalischen Initiator, sowie
   - eine Verbindung der Formel (I) 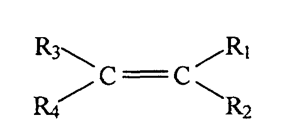 worin R₁ bis R₄ jeweils unabhängig voneinander für Wasserstoff, einen jeweils unsubstituierten oder substituierten Alkylrest, Cycloalkylrest, Aralkylrest, einen unsubstituierten oder einen substituierten aromatischen Kohlenwasserstoffrest stehen, mit der Maßgabe, daß mindestens zwei der Reste R₁ bis R₄ für einen unsubstituierten oder einen substituierten aromatischen Kohlenwasserstoffrest stehen, oder die Reste R¹ und R² oder R³ und R⁴ jeweils paarweise für einen substituierten oder unsubstituierten aromatischen Kohlenwasserstoff mit 6 bis 18 C-Atomen und eine funktionelle Gruppe, die in Konjugation zur C-C-Doppelbindung in der allgemeinen Formel I eine Mehrfachbindung zwischen einem C-Atom und einem Heteroatom aufweist, stehen,
wobei während der Reaktion im Reaktionsgemisch 10 Gew.-% Wasser oder weniger vorliegen.

Weiterhin betrifft die Erfindung ein Umsetzungsprodukt (A), das mittels eines Verfahrens umfassend die folgende Stufe (i) herstellbar ist:
(i) Reaktion unter radikalischen Bedingungen eines Reaktionsgemischs, umfassend mindestens ein radikalisch umsetzbaren Monomeren (a) in Gegenwart mindestens eines radikalischen Initiators sowie einer Verbindung der allgemeinen Formel I 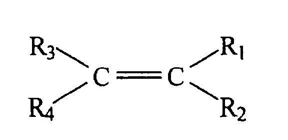 worin R₁ bis R₄ jeweils unabhängig voneinander für Wasserstoff, einen jeweils unsubstituierten oder substituierten Alkylrest, Cycloalkylrest, Aralkylrest, einen unsubstituierten oder einen substituierten aromatischen Kohlenwasserstoffrest stehen, mit der Maßgabe, daß mindestens zwei der Reste R₁ bis R₄ für einen unsubstituierten oder einen substituierten aromatischen Kohlenwasserstoffrest stehen, oder die Reste R¹ und R² oder R³ und R⁴ jeweils paarweise für einen substituierten oder unsubstituierten aromatischen Kohlenwasserstoff mit 6 bis 18 C-Atomen und eine funktionelle Gruppe, die in Konjugation zur C-C-Doppelbindung in der allgemeinen Formel I eine Mehrfachbindung zwischen einem C-Atom und einem Heteroatom aufweist, stehen,
wobei während Reaktion im Reaktionsgemisch 10 Gew.-% Wasser oder weniger vorliegen.

Im Rahmen des obigen erfindungsgemäßen Verfahrens können alle radikalisch umsetzbaren Monomere als Monomeres (a) eingesetzt werden.

Beispielsweise können als Monomere (a) radikalisch homo- oder copolymerisierbare Verbindungen eingesetzt werden, die eine hydrophile Gruppe, z.B. eine Carboxylgruppe, umfassen. In diesem Falle handelt es sich bei den Monomeren (a) um hydrophile, radikalisch homo- oder copolymerisierbare Monomere, d.h. um Monomere, deren Löslichkeit in Wasser höher als die von Styrol ist.

Selbstverständlich können auch Gemische verschiedener hydrophiler Monomere im Rahmen der vorliegenden Erfindung als Monomere (a) eingesetzt werden.

Im Rahmen einer weiteren Ausführungsform der vorliegenden Erfindung können jedoch auch radikalisch polymerisierbare Monomere eingesetzt werden, die eine Wasserlöslichkeit aufweisen, die derjenigen von Styrol entspricht oder sogar geringer ist.

Darüber hinaus lassen sich gemäß dem erfindungsgemäßen Verfahren auch Gemische aus mindestens einem hydrophilen Monomeren und mindestens einem hydrophoben Monomeren polymerisieren. Im einzelnen sind als Monomere (a) zu nennen:

C₁- bis C₂₀-Alkyl- und Hydroxyalkylester von monoethylenisch ungesättigten C₃- bis C₁₀-Monocarbonsäuren oder C₄- bis C₈-Dicarbonsäuren, beispielsweise Methylmethacrylat, Ethylmethacrylat, Propylmethacrylat (alle Isomere), Butylmethacrylat (alle Isomere), 2-Ethylhexylmethacrylat, Isobornylmethacrylat, Methylacrylat, Ethylacrylat, Propylacrylat (alle Isomere), Butylacrylat (alle Isomere), 2-Ethylhexylacrylat, Isobornylacrylat, Benzylacrylat, Phenylacrylat, Stearylacrylat, Maleinsäurediethylester, Hydroxyethylacrylat, Hydroxypropylacrylat, Hydroxybutylacrylat, weiterhin (Meth)Acrylester von alkoxylierten C₁- bis C₁₈-Alkoholen, die mit 2 bis 50 mol Ethylenoxid, Propylenoxid, Butylenoxid oder Mischungen hiervon umgesetzt sind; Benzylmethacrylat, Phenylmethacrylat, Stearylmethacrylat, Methacrylnitril, Styrol, α-Methylstyrol, Acrylnitril, funktionalisierte Methacrylate; Acrylate und Styrole, ausgewählt unter Glycidylmethacrylat, 2-Hydroxyethylmethacrylat, Hydroxypropylmethacrylat (alle Isomere), Hydroxybutylmethacrylat (alle Isomere), Diethylaminoethylmethacrylat, Triethylenglycolmethacrylat, Itaconsäureanhydrid, Itaconsäure, Glycidylacrylat, 2-Hydroxyethylmethacrylat, Diethylaminoethylacrylat, Triethylenglycolacrylat, Methacrylamid, N-tert.-Butylmethacrylamid, N-n-Butylmethacrylamid, N-Methylolmethacrylamid, N-Ethylolmethacrylamid, N-tert-Butylacrylamid, N-Butylacrylamid, N-Methylolacrylamid, N-Ethylolacrlyamid, Vinylbenzoesäure (alle Isomere), Diethylaminostyrol (alle Isomere), α-Methylvinylbenzoesäure (alle Isomere), Diethylamino-α-methylstyrol (alle Isomere), p-Methylstyrol, p-Vinylbenzolsulfonsäure, Trimethoxysilylpropylmethacrylat, Triethoxysilylpropylmethacrylat, Tributoxysilylpropylmethacrylat, Diethoxymethylsilylpropylmethacrylat, Dibutoxymethylsilylpropylmethacrylat, Diisopropoxymethylsilylpropylmethacrylat, Dimethoxysilylpropylmethacrylat, Diethoxysilylpropylmethacrylat, Dibutoxysilylpropylmethacrylat, Diisopropoxysilylpropylmethacrylat, Trimethoxysilylpropylacrylat, Triethoxysilylpropylacrylat, Tributoxysilylpropylacrylat, Dimethoxymethylsilylpropylacrylat, Diethoxyrnethylsilylpropylacrylat, Dibutoxymethylsilylpropylacrylat, Diisopropoxymethylsilylpropylacrylat, Dimethoxysilylpropylacrylat, Diethoxysilylpropylacrylat, Dibutoxysilylpropylacrylat, Diisopropoxysilylpropylacrylat, Vinylacetat und Vinylbutyrat, Vinylchlorid, Vinylfluorid, Vinylbromid, Vinylalkohol, Vinylether von C₁- bis C₁₈-Alkoholen, Vinylether von alkoxylierten C₁- bis C₁₈-Alkoholen und Vinylether von Polyalkylenoxiden wie Polyethylenoxid, Polypropylenoxid oder Polybutylenoxid, monoethylenisch ungesättigte C₃- bis C₁₀-Monocarbonsäuren, deren Alkalimetallsalze und/oder Ammoniumsalze, beispielsweise Acrylsäure, Methacrylsäure, Dimethylacrylsäure, Ethylacrylsäure, Allylessigsäure oder Vinylessigsäure, weiterhin monoethylenisch ungesättigte C₄- bis C₈-Dicarbonsäuren, deren Halbester, Anhydride, Alkalimetallsalze und/oder Ammoniumsalze, beispielsweise Maleinsäure, Fumarsäure, Itaconsäure, Mesaconsäure, Methylenmalonsäure, Citraconsäure, Maleinsäureanhydrid, Itaconsäureanhydrid oder Methylmalonsäureanhydrid; weiterhin Sulfonsäuregruppen enthaltende monoethylenisch ungesättigte Monomere, beispielsweise Allylsulfonsäure, Styrolsulfonsäure, 2-Acrylamido-2-methylpropan-sulfonsäure, Methallylsulfonsäure, Vinylsulfonsäure, Acrylsäure-3-sulfopropyl-ester oder Methacrylsäure-3-sulfopropylester, weiterhin Phosphonsäuregruppen enthaltende monoethylenisch ungesättigte Monomere, beispielsweise Vinylphosphonsäure, Allylphosphonsäure oder Acrylamidoethylpropanphosphonsäure, weiterhin Amide und N-substituierte Amide von monoethylenisch ungesättigten C₃- bis C₁₀-Monocarbonsäuren oder C₄- bis C₈-Dicarbonsäuren, beispielsweise Acrylamid, N-Alkylacrylamide oder N,N-Dialkylacrylamide mit jeweils 1 bis 18 C-Atomen in der Alkylgruppe wie N-Methylacrylamid, N,N-Dimethylacrylamid, N-tert.-Butylacrylamid oder N-Octadecylacrylamid, Maleinsäuremonomethylhexylamid, Maleinsäuremonodecylamid, Diethylaminopropylmethacrylamid oder Acrylamidoglykolsäure; weiterhin Alkylaminoalkyl(meth)acrylate, beispielsweise Dimethylaminoethylacrylat, Dimethylaminoethylmethacrylat, Ethylaminoethylacrylat, Diethylaminoethylmethacrylat, Dimethylaminopropylacrylat oder Dimethylaminopropylmethacrylat; weiterhin Vinylester wie Vinylformiat, Vinylacetat oder Vinylpropionat, wobei diese nach der Polymerisation auch verseift vorliegen können; weiterhin N-Vinylverbindungen, beispielsweise N-Vinylpyrrolidon, N-Vinylcaprolactam, N-Vinylformamid, N-Vinyl-N-methylformamid, 1-Vinylimidazol oder 1-Vinyl-2-methylimidazol; weiterhin Vinylether von C₁- bis C₁₈-Alkoholen, Vinylether von alkoxylierten C₁- bis C₁₈-Alkoholen und Vinylether von Polyalkylenoxiden wie Polyethylenoxid, Polypropylenoxid oder Polybutylenoxid, Styrol oder dessen Derivate wie α-Methylstyrol, Inden, Dicyclopentadien, Monomere, die Amino- oder Iminogruppen wie Dimethylaminoethylmethacrylat, Diethylaminoethylacrylat, Diethylaminopropylmethacrylamid oder Allylamin, Monomere, die quartäre Ammoniumgruppen tragen, wie z.B. vorliegend als Salze, wie sie durch Umsetzung der basischen Aminofunktionen mit Säuren wie Salzsäure, Schwefelsäure, Salpetersäure, Ameisensäure oder Essigsäure erhalten werden, oder in quaternisierter Form (Beispiele geeigneter Quaternisierungsmittel sind Dimethylsulfat, Diethylsulfat, Methylchlorid, Ethylchlorid oder Benzylchlorid), wie z.B. Dimethylaminoethylacrylathydrochlorid, Diallyldimethylammoniumchlorid, Dimethylaminoethylacrylatmethylchlorid, Dimethylaminoethylaminopropylmethacrylamid-methosulfat, Vinylpyridiniumsalze oder 1-Vinylimidazoliumsalze; Monomere, bei denen die Aminogruppen und/oder Ammoniumgruppen erst nach der Polymerisation und anschließender Hydrolyse freigesetzt werden, wie beispielsweise N-Vinylformamid oder N-Vinylacetamid sowie Gemische aus zwei oder mehr der vorstehend genannte Monomere.

Im Rahmen einer bevorzugten Ausführungsform finden als ein erstes Monomeres (a) Styrol oder eines oder mehrere der oben genannten Styrolderivate, Acryl- oder Methacrylsäure, ein C₁-C₄-Alkyl- oder -Hydroxyalkylacrylat oder -methacrylat, Vinylacetat, einer der oben genannten Vinylether oder ein Gemisch aus zwei oder mehr davon, ein substituiertes oder unsubstituiertes Vinylpyrrolidon, ein Gemisch aus zwei oder mehr davon, oder ein Gemisch aus diesem ersten Monomer (a') mit mindestens einem weiteren radikalisch homo- oder copolymerisierbaren Monomer (a) Verwendung.
Erfindungsgemäß wird bei der Herstellung des Umsetzungsprodukts (A) eine Verbindung (I) der Formel 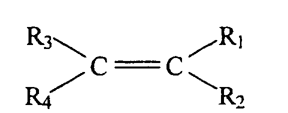 verwendet, worin R₁ bis R₄ die oben genannte Bedeutung aufweisen. Unter einem "Heteroatom" wird im Rahmen der vorliegenden Erfindung ein von Kohlenstoff verschiedenes Atom verstanden, das zur Ausbildung von Mehrfachbindungen (Doppel- oder Dreifachbindungen) mit einem C-Atom fähig ist.

Im Rahmen einer bevorzugten Ausführungsform der Erfindung werden als Verbindung der allgemeinen Formel I 1,1-Diphenylethen, 1,1-Dinaphthylethen, 4,4-Vinylidenbis(N,N'-dimethylanilin), 4,4-Vinylidenbis(amino-benzol), cis-Stilben, trans-Stilben, α-Phenylacrylsäuremethylester, α-Phenylmethacrylsäuremethylester, α-Phenylacrylnitril, α-Phenylmethacrylnitril oder ein Gemisch aus zwei oder mehr davon eingesetzt. Im Rahmen einer weiteren bevorzugten Ausführungsform der Erfindung wird als Verbindung der allgeeinen Formel I 1,1-Diphenylethen eingesetzt.

Ebenfalls als Verbindung der allgemeinen Formel I geeignet sind substituierte Diphenylethene, die entweder an einem oder beiden aromatischen Kohlenwasserstoffresten mit elektronenziehenden oder elektronenschiebenden Substituenten, wie z.B. tert.-Butyl-, Benzyl- oder CN-Gruppen substituiert sind, oder ein Alkoxydiphenylethylen, wie z.B. Methoxy-, Ethoxy- oder tert.-Butyloxydiphenylethylen, sowie die analogen Thio- oder Aminoverbindungen, eingesetzt werden.

Das erfindungsgemäße Verfahren wird in Gegenwart mindestens eines radikalischen Initiators durchgeführt, wobei hier oxidierende radikalische Initiatoren bevorzugt sind. Vorzugsweise sollte der Initiator im verwendeten Lösemittel oder zumindest in den zur Polymerisation eingesetzten Monomeren löslich sein. Im allgemeinen können jedoch alle bei der Radikalkettenpolymerisation herkömmlicherweise verwendeten Azo- und/oder Peroxo-Verbindungen eingesetzt werden.

Geeignete Initiatoren sind in der WO 98/01478 auf S. 10, Z. 17-34 beschrieben, die diesbezüglich vollumfänglich in den Kontext der vorliegenden Anmeldung aufgenommen wird.

In einer bevorzugten Ausführungsform des erfindungsgemäßen Verfahrens wird eine vergleichsweise große Menge an radikalischem Initiator zugegeben, wobei der Anteil an radikalischem Initiator am Reaktionsgemisch vorzugsweise 0,5 bis 50 Gew.-%. weiter bevorzugt 1 bis 20 Gew.-%, jeweils bezogen auf die Gesamtmenge des Monomeren (a) und des Initiators, beträgt. Vorzugsweise beträgt das Verhältnis Initiator zu Verbindung der allgemeinen Formel I 3:1 bis 1:3, weiter bevorzugt 2:1 bis 1:2, und insbesondere 1,5:1 bis 1:1,5.

Die oben beschriebene Reaktion gemäß Stufe (i) wird in im Rahmen der vorliegenden Erfindung in einem organischen Lösemittel oder lösemittelfrei (" in Substanz "), beispielsweise in Schmelze, in Gegenwart von 10 Gew.-% Wasser oder weniger durchgeführt. Im Rahmen einer bevorzugten Ausführungsform der vorliegenden Erfindung beträgt der Wassergehalt der Reaktionsgemischs 5 Gew.-% oder weniger, beispielsweise weniger als etwa 3, 2 oder 1 Gew.-%. Im Rahmen einer weiteren bevorzugten Ausführungsform der Erfindung weist das Reaktionsgemische einen deutlich unter den genannten Werten liegenden Wassergehalt auf, beispielsweise weniger als etwa 0,5 Gew.-%, bezogen auf das Reaktionsgemisch. Im Rahmen einer weiteren bevorzugten Ausführungsform der Erfindung ist das Reaktionsgemisch im wesentlichen wasserfrei.

Unter einem "im wesentlichen wasserfreien" Reaktionsgemisch wird ein Reaktionsgemisch verstanden, das weniger als etwa 0,1 Gew.-% Wasser aufweist, beispielsweise einen Wassergehalt, wie er üblicherweise in kommerziell erhältlichen Lösemitteln die bei radikalischen Polymerisationen als organische Lösemittel eingesetzt werden zu finden ist. Im Rahmen einer weiteren bevorzugten Ausführungsform der Erfindung ist das Reaktionsgemisch wasserfrei, d.h., es weist einen Wassergehalt von weniger als 0,001 Gew.-%, bezogen auf das Reaktionsgemisch, auf.

Als Lösemittel eignen sich im Rahmen der vorliegenden Erfindung grundsätzlich alle polaren und unpolaren organischen Lösemittel in denen die entsprechenden und vorzugsweise auch die entstehenden Polymeren, gegebenenfalls bei erhöhter Temperatur, löslich sind. Geeignete Lösemittel sind beispielsweise C3 bis C10 Alkane, Cyclohexan, Decalin, Aceton, Methylethylketon, Diisobutylketon, Tetrahydrofuran, Dioxan, Benzol, Toluol, Glykole wie Ethylenglykol, Triethylenglykol, teilweise oder völlig endgruppenverschlossene Glykolether wie Ethylenglykolmonomethylether, Essigsäureethylester, Methanol oder Ethanol oder die höheren Homologen der Alkanole mit bis zu 18 C-Atomen (gegebenenfalls als Cosolvens) oder Gemische aus zwei oder mehr davon.

Die Reaktion gemäß Stufe (i) wird im allgemeinen bei Temperaturen oberhalb Raumtemperatur und unterhalb der Zersetzungstemperatur der Monomeren durchgeführt, wobei vorzugsweise ein Temperaturbereich von 50 bis 150 °C, weiter bevorzugt 70 bis 120 °C und insbesondere 80 bis 110 °C gewählt wird.

Die Reaktion gemäß Stufe (i) wird im allgemeinen bei Drücken von 1 bis 300 bar, beispielsweise von etwa 1,5 bis 100 oder etwa 2 bis etwa 20 bar durchgeführt.

Obwohl bzgl. der Molekulargewichtsverteilung keinerlei Beschränkungen existieren, kann in der Reaktion gemäß (i) ein Umsetzungsprodukt erhalten werden, das eine Molekulargewichtsverteilung M_{w}/Mₙ gemessen mit Gelpermeationschromatographie unter Verwendung von Polystyrol als Standard von ≤ 4, vorzugsweise ≤ 3, weiter bevorzugt ≤ 2, insbesondere ≤ 1,5 und in einzelnen Fällen auch ≤ 1,3 besitzt. Die Molekulargewichte des Umsetzungsprodukts (A) sind durch die Wahl der Verhältnisses Monomere (a) zu Verbindungen (I) zu radikalischem Initiator in weiten Grenzen steuerbar. Dabei bestimmt insbesondere der Gehalt an Verbindung (I) das Molekulargewicht, und zwar derart, daß je größer der Anteil an Verbindung (I) ist, desto geringer das erhaltene Molekulargewicht.

Das in der Reaktion gemäß (i) erhaltene Umsetzungsprodukt kann dabei direkt weiter verarbeitet werden, beispielsweise als Makroinitiator für die weitere Umsetzung gemäß Stufe (ii), wie weiter unten definiert, eingesetzt werden. Darüber hinaus kann das Umsetzungsprodukt gemäß Stufe (i) als Feststoff isoliert und einer Anwendung zugeführt werden.

Im Rahmen des erfindungsgemäßen Verfahrens kann das Umsetzungsprodukt der Stufe (i) im Rahmen einer nachfolgenden Stufe (ii) mit einem weiteren radikalisch homo- oder copolymerisierbaren Monomeren oder einem Gemisch aus zwei oder mehr solcher Monomerer umgesetzt werden.

In einer solchen Umsetzung gemäß Stufe (ii) kann demnach das Umsetzungsprodukt der Stufe (i) mit mindestens einem frei wählbaren, radikalisch homo- oder copolymerisierbaren Monomeren (b) umgesetzt werden. Dabei kann das Monomere (b) gleich oder verschieden sein vom in der Stufe (i) eingesetzten Monomeren (a). Die Auswahl des Monomeren (b) erfolgt prinzipiell nach der gewünschten Struktur des in Stufe (ii) hergestellten Polymeren und damit in Abhängigkeit von der angestrebten Verwendung dieses Polymeren.

Grundsätzlich sind als Monomere (b) die bereits im Rahmen der Erläuterung der Monomeren (a) genannten Monomeren geeignet.

Demgemäß betrifft die vorliegende Erfindung auch ein Verfahren zur Herstellung eines Polymeren (B), das umfaßt:

Umsetzung des in Stufe (i) erhaltenen Umsetzungsprodukts (A) unter radikalischen Bedingungen in Gegenwart mindestens einem radikalisch homo- oder copolymerisierbaren Monomer (b).

Die Umsetzung gemäß Stufe (ii) wird prinzipiell nach den üblichen Bedingungen für eine radikalische Polymerisation durchgeführt, wobei die Umsetzung entsprechend der Stufe (i) in einem Lösemittel oder lösemittelfrei durchgeführt werden kann.

Die Stufen (i) und (ii) können im Rahmen des erfindungsgemäßen Verfahrens sowohl räumlich als auch zeitlich getrennt voneinander durchgeführt werden, wobei zunächst Stufe (i) und anschließend Stufe (ii) durchgeführt wird. Die Stufen (i) und (ii) können dabei auch in nur einem Reaktionsgefäß nacheinander durchgeführt werden, d.h. zunächst wird mindestens ein Monomeres (a) in Gegenwart einer Verbindung der allgemeinen Formel (I) in Abhängigkeit von der gewünschten Anwendung bzw. der gewünschten Eigenschaften teilweise oder vollständig radikalisch polymerisiert und anschließend mindestens ein Monomeres (b) zugegeben und ebenfalls radikalisch polymerisiert.

Es ist im Rahmen der vorliegenden Erfindung jedoch ebenso möglich, daß von Anfang an ein Monomerengemisch umfassend mindestens ein Monomeres (a) und mindestens ein Monomeres (b) eingesetzt und in Gegenwart der Verbindung (I) zur Reaktion gebracht wird.

Dabei wird angenommen, daß die Verbindung (I) zunächst mit dem mindestens einen Monomeren (a) reagiert und anschließend das daraus gebildete Umsetzungsprodukt (A) oberhalb eines bestimmten Molekulargewichts auch mit dem Monomeren (b) reagiert.

Je nach Reaktionsführung ist es dabei erfindungsgemäß möglich, an den Endgruppen funktionalisierte Polymere, Block- oder Multiblock- sowie Gradienten(Co)Polymere, sternförmige Polymere, Pfropf-Copolymere und verzweigte (Co)Polymere herzustellen.

Wie sich aus obigem ergibt, betrifft die vorliegende Erfindung auch das Polymere (B) an sich, das durch das oben definierte Verfahren herstellbar ist. Dabei wird die erfindungsgemäße Umsetzung vorzugsweise so durchgeführt, daß ein Polymeres (B) erhalten wird, welches eine Blockstruktur aufweist.

Es ist erfindungsgemäß darüber hinaus vorgesehen, daß ein Polymeres (B) in einer weiteren Reaktionsstufe (iii) mit einem weiteren Monomeren (c) umgesetzt wird, wobei das Monomere (c) ebenfalls beispielsweise aus der bereits oben genannten Aufzählung ausgewählt werden kann. Die Umsetzung erfolgt wie bereits für Stufen (i) und (ii) beschrieben. Das erfindungsgemäße Verfahren kann entsprechend mit einer, im wesentlichen nur durch die Reaktionsbedingungen und die Materialeigenschaften des entstehenden Polymeren begrenzten, beliebige Zahl an Stufen mit einer entsprechend beliebigen Zahl an Monomeren durchgeführt werden. Entsprechend lassen sich beliebige

Blockcopolymere mit einer entsprechend hohen Zahl an Blöcken oder statistische Copolymere mit einer entsprechenden Zahl unterschiedlicher Monomerer erhalten.

Gegenstand der vorliegenden Erfindung ist daher auch ein Verfahren zur Herstellung eines Polymeren (C), bei dem als Stufe
(iii) das in Stufe (ii) erhaltene Umsetzungsprodukt (B) unter radikalischen Bedingungen in Gegenwart von mindestens einem, radikalisch homo- oder copolymerisierbaren Monomeren (c) umgesetzt wird, wobei diese Umsetzung gegebenenfalls mehrfach hintereinander mit gleichen oder verschiedenen Monomeren (c) wiederholt wird.

Dabei ist es erfindungsgemäß möglich, in einfacher Weise unter Verwendung einer einfach zugänglichen Verbindung der allgemeinen Formel (I) Blockcopolymere bereitzustellen, die z.B. einen hydrophilen Block, wie z.B. einen (Meth)acrylsäure- oder einen C₁₋₄-Alkyl(meth)acrylat-Block und eine weiteren, vorzugsweise hydrophoben Polymer-Block, wie z.B. einen Block auf der Basis von vinylaromatischen Monomeren, wie z.B. Styrol oder substituierten Styrolen, sowie nicht-aromatischen Vinylverbindungen, wie z.B. Vinylacetat, sowie höhere (> C₄) Alkyl(meth)acrylate aufweisen. Im Rahmen der vorliegenden Erfindung ist es jedoch ebenso möglich, unter Verwendung der Verbindung gemäß der allgemeinen Formel I Blockcopolymere bereitzustellen, die einen hydrophoben und darauffolgend einen hydrophilen Block aufweisen.

Es hat sich im Rahmen der vorliegenden Erfindung gezeigt, daß auch solche Monomeren durch das erfindungsgemäße Verfahren radikalisch homo- oder copolymerisierbar sind, die eine elektronenreiche olefinisch ungesättigte Doppelbindung aufweisen. Beispiele für solche Verbindungen sind die Vinylether, Vinylester, beispielsweise Vinylacetat, oder die N-Vinylverbindungen, wie sie bereits oben genannt wurden.

Im Rahmen des erfindungsgemäßen Verfahrens können dabei die Monomeren im wesentlichen in beliebiger Reihenfolge copolymerisiert werden, ohne daß beispielsweise eine bestimmte Abfolge von hydrophilen und hydrophoben Monomeren beachtet werden muß.

### Ferner sind erfindungsgemäß auch Polymere der folgenden Struktur herstellbar:

Poly((meth)acrylsäure-stat-(meth)acrylat-b-(styrol-stat-(meth)acrylat)), wobei der Begriff "(meth)acrylat", Alkylester der Methacrylsäure und Acrylsäure bezeichnet.

Im einzelnen sind die folgenden, neuen Blockcopolymeren zu nennen:
Poly(styrol-b-acrylsäure), Poly(styrol-b-acrylsäuremethylester), Poly(styrol-b-acrylsäureethylester), Poly(styrol-b-methacrylsäure), Poly(styrol-b-methacrylsäuremethylester), Poly(styrol-b-methacrylsäureethylester), Poly(hydroxyethylacrylat-b-methacrylsäure), Poly(N-vinylpyrrolidon-b-Acrylsäuremethylester), Poly(N-Vinylpyrrolidon-b-acrylsäureethylester), Poly(N-vinylpyrrolidon-b-Methacrylsäuremethylester), Poly(N-vinylpyrrolidon-b-Methacrylsäureethylester), Poly(N-vinylpyrrolidon-b-Styrol), Poly(N-vinylpyrrolidon-b-vinylacetat), Poly(N-vinylpyrrolidon-b-α-Methylstyrol), Poly(Nvinylformamid-b-Methacrylsäuremethylester), Poly(N-vinylformamid-b-Methacrylsäureethylester), Poly(N-vinylformamid-b-vinylacetat), Poly(N-vinylformamid-b-Acrylsäuremethylester) oder Poly(N-vinylformamid-b-Acrylsäureethylester).

### Weiterhin sind gemäß der vorliegenden Erfindung herstellbar:

Poly(methacrylsäuremethylester-b-(styrol-stat-acrylnitril)), Poly(n-butylacrylat-b-styrol-b-n-butylacrylat), Poly(styrol-b-n-butylacrylat-b-styrol), Poly(styrol-b-n-butylacrylat-b-styrol-b-n-butylacrylat), Poly(methylmeth-acrylat-b-styrol-b-methylmethacrylat-b-styrol), Poly(n-butylacrylat-b-styrol-b-n-butylacrylat-b-styrol) und dergleichen.

Im folgenden soll die vorliegende Erfindung nunmehr anhand einiger Beispiele erläutert werden.

### Beispiele

### Beispiel 1

Aus 100 g Methacrylsäuremethylester, 0,9 g 1,1-Diphenylethen und 0,55 g Azodiisobutyronitril wurde eine Stammlösung angesetzt und je 25 g dieses Monomerengemisches in 35 ml Cyclohexan gelöst (Lösungen A, B und C). Die Lösungen wurden nach Angabe von Tabelle 1 zur Reaktion gebracht.

**Tabelle 1**

| Polymeres | Reaktionstemperatur [°C] | Reaktionszeit [h] | M_{w} [g/mol] |
|---|---|---|---|
| A | 90 | 1,5 | 23.400 |
| B | 80 | 6 | 29.200 |
| C | 70 | 22,5 | 55.300 |

Aus den Lösungen A, B und C wurden entsprechend die Polymere A, B und C erhalten und im zweiten Schritt je 2 g mit je 10 g Styrol 8 h bei 85 °C zur Reaktion gebracht. Tabelle 2 zeigt die Molekulargewichte und Umsätze der erhaltenen Blockcopolymerisate A2, B2 und C2.

**Tabelle 2**

| Polymer | M_{w} [g/mol] |
|---|---|
| A2 | 225.100 |
| B2 | 241.400 |
| C2 | 304.200 |

Um eventuell vorhandenes Homopolystyrol zu entfernen, wurde das Blockcopolymer wiederholt in Cyclohexan gefällt und mit heißem Cyclohexan im Ultraschallbad extrahiert. Es wurde ein Masseverlust von weniger als 5 % festgestellt. Vom gereinigten Blockcopolymeren wurde ein IR-Spektrum aufgenommen. Beide Monomere konnten zweifelsfrei gefunden und damit die chemische Verknüpfung des Polymethylmethacrylat- und Polystyrolblockes nachgewiesen werden.

Zur Überprüfung der beschriebenen Prozedur wurde eine physikalische Mischung aus Homopolystyrol (2 g) und Homopolymethylmethacrylat (1 g) ebenfalls in Cyclohexan gefällt und mit heißem Cyclohexan im Ultraschallbad extrahiert. Der Masseverlust betrug 93 %. Das vom Rückstand aufgenommene IR-Spektrum ließ kein Styrol erkennen.

### Beispiel 2

Aus 100 g Methacrylsäuremethylester, 0,9 g 1,1-Diphenylethen und 1,08 g Benzoylperoxid wurde eine Stammlösung angesetzt und je 25 g dieses Monomerengemisches in 35 ml Cyclohexan gelöst (Lösungen D und E). Die Lösungen wurden nach Angabe von Tabelle 3 zur Reaktion gebracht.

**Tabelle 3**

| Polymeres | Reaktionstemperatur [°C] | Reaktionszeit [h] | M_{w} [g/mol] | Umsatz [%] |
|---|---|---|---|---|
| D | 90 | 17,2 | 51.900 | 100 |
| E | 100 | 8 | 50.400 | 100 |

Aus den Lösungen D und E wurden entsprechend die Polymere D und E erhalten. In einem zweiten Schritt wurden je 5 g der Polymeren D und E mit je 20 g Styrol 12 h bei 85 °C zur Reaktion gebracht. Tabelle 4 zeigt die Molekulargewichte und Umsätze für die erhaltenen Blockcopolymeren D2 und E2.

**Tabelle 4**

| Polymeres | M_{w} [g/mol] |
|---|---|
| D2 | 341.800 |
| E2 | 435.900 |

### Beispiel 3

100 g Methylmethacrylat wurden mit 0,9 g 1,1-Diphenylethen (Lösung F), 0,5 g 1,1-Diphenylethen (Lösung G) bzw. 0,4 g 1,1-Diphenylethen (Lösung H) und je 0,16 g Azodiisobutyronitril in 140 ml Cyclohexan gelöst und 1,5 h bzw. 6 h auf 90 °C erhitzt. Nach der Polymerisation wurden die Polymeren in THF aufgenommen und in Methanol gefällt. Die Ergebnisse sind in Tabelle 5 aufgelistet.

**Tabelle 5**

| Lösung | Reaktionszeit [h] | Polymeres | M_{w} [g/mol] |
|---|---|---|---|
| F | 1,5 | F (1,5) | 87.100 |
| F | 6 | F (6) | 177.300 |
| G | 1,5 | G (1,5) | 116.300 |
| G | 6 | G (6) | 279.700 |
| H | 1,5 | H (1,5) | 135.200 |
| H | 6 | H (6) | 296.300 |

Je 0,5 g der erhaltenen Polymere F bis H wurden anschließend mit je 10 g Styrol 12 h bei 85 °C zur Reaktion gebracht. Die Blockcopolymeren wurden in THF gelöst und in Methanol gefällt. Tabelle 6 zeigt die Molekulargewichte und Umsätze der erhaltenen Blockcopolymeren F2 bis G2.

**Tabelle 6**

| Polymeres | M_{w} [g/mol] |
|---|---|
| F(1,5)2 | 340.600 |
| F (6) 2 | 412.200 |
| G (1,5) 2 | 381.300 |
| G (6) 2 | 380.100 |
| H (1,5) 2 | 398.000 |
| H (6) 2 | 361.400 |

### Beispiel 4

25 g Methacrylsäuremethylester (Lösung I) bzw. 26,03 g Styrol (Lösung J) wurden zusammen mit 0,2 g 1,1-Diphenylethen und 0,14 g Azodiisobutyronitril in 35 ml des in Tabelle 7 angegebenen Lösungsmittels gelöst und anschließend 12 h auf 85 °C gehalten. Nach der Polymerisation wurden die Polymeren in THF aufgenommen und in Methanol gefällt.

**Tabelle 7**

| Lösung | Lösemittel | Polymeres | M_{w} [g/mol] |
|---|---|---|---|
| I | Cyclohexan | I (C) | 49.900 |
| I | Methylethylketon | I (M) | 29.400 |
| I | Dioxan | I (D) | 34.200 |
| J | Cyclohexan | J (C) | 32.200 |
| J | Methylethylketon | J (M) | 21.500 |
| J | Dioxan | J (D) | 37.900 |

Je 5 g Polymere I wurden anschließend in 20 g Styrol gelöst und 6 h bei 110 °C gehalten. Je 2,5 g Polymer J wurden in 10 g Methacrylsäuremethylester gelöst und ebenfalls 6 h bei 110 °C gehalten. Die Polymeren I2 und J2 wurden anschließend in THF aufgenommen und in Methanol gefällt (siehe Tabelle 8).

**Tabelle 8**

| Polymeres | M_{w} [g/mol] |
|---|---|
| I (C) 2 | 140.500 |
| I(M)2 | 173.400 |
| I(D)2 | 139.800 |
| J (C) 2 | 519.400 |
| J (M) 2 | 618.300 |
| J (D) 2 | 610.500 |

### Beispiel 5

Je 1 g des in Beispiel 4 beschriebenen Polymeren J (M) wurde in je 10 g des in Tabelle 9 angegebenen Monomeren gelöst und 6 h auf 110 °C erhitzt.

**Tabelle 9**

| Monomeres 2 | Zuwachs an Monomerem 2 [g] |
|---|---|
| N-Vinylpyrrolidon | 10 |
| Methacrylsäuremethylester | 9,2 |

### Beispiel 6

Je 3,4 g des in Beispiel 2 beschriebenen Polymeren E wurden in 13,6 g Methacrylsäuremethylester gelöst und auf 85 °C erhitzt. Nach den in Tabelle 10 angegebenen Reaktionszeiten wurde die Polymerisation abgebrochen, das Produkt in THF aufgenommen und in Methanol gefällt.

**Tabelle 10**

| Reaktionszeit [h] | M_{w} [g/mol] | Massezunahme des Polymeren [%] |
|---|---|---|
| 4 | 134.500 | 36 |
| 12 | 333.500 | 76 |
| 24 | 396.600 | 129 |

### Beispiel 7

99,99 g N-Vinylpyrrolidon, 0,8 g 1,1-Diphenylethen und 0,49 g Azodiisobutyronitril wurden 6 h auf 85 °C erhitzt. Das erhaltene Polymere K wurde in THF aufgenommen und in Diethylether gefällt.

0,5 g des Polymer K wurde in 10 g Styrol gelöst und 6 h auf 110 °C erhitzt. Die Massenzunahme an Styrol betrug 1 g. Die Blockstruktur des Polymeren wurde durch Extraktionsversuche bzw. Fällungen in Methanol und Wasser und anschließende IR-spektroskopische Untersuchung des gereinigten Produktes nachgewiesen. Im IR-Spektrum sind sowohl die Signale Styroleinheiten zu sehen, als auch die der N-Vinylpyrrolidoneinheiten.

## Patentansprüche

1. Verfahren zur Herstellung eines Umsetzungsprodukts (A), das die folgende Stufe (i) umfaßt:
(i) Reaktion unter radikalischen Bedingungen eines Reaktionsgemischs, umfassend
- mindestens ein radikalisch polymerisierbares Monomeres (a),
- mindestens einen radikalischen Initiator, sowie
- eine Verbindung der Formel (I) 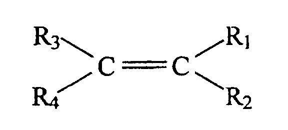 worin R₁ bis R₄ jeweils unabhängig voneinander für Wasserstoff, einen jeweils unsubstituierten oder substituierten Alkylrest, Cycloalkylrest, Aralkylrest, einen unsubstituierten oder einen substituierten aromatischen Kohlenwasserstoffrest stehen, mit der Maßgabe, daß mindestens zwei der Reste R₁ bis R₄ für einen unsubstituierten oder einen substituierten aromatischen Kohlenwasserstoffrest stehen, oder die Reste R¹ und R² oder R³ und R⁴ jeweils paarweise für einen substituierten oder unsubstituierten aromatischen Kohlenwasserstoff mit 6 bis 18 C-Atomen und eine funktionelle Gruppe, die in Konjugation zur C-C-Doppelbindung in der allgemeinen Formel I eine Mehrfachbindung zwischen einem C-Atom und einem Heteroatom aufweist, stehen,
wobei während der Reaktion im Reaktionsgemisch 10 Gew.-% Wasser oder weniger vorliegen.

2. Verfahren nach Anspruch 1, wobei die Reaktion bei einem Druck zwischen 1 und 300 bar durchgeführt wird.

3. Verfahren nach einem der Ansprüche 1 oder 2, wobei der Anteil von radikalischem Initiator zu dem mindestens einen Monomeren (a) 0,5 bis 50 Gew.-%, bezogen auf die Gesamtmenge des Initiators und des Monomeren (a), beträgt.

4. Verfahren nach einem der Ansprüche 1 bis 3, wobei als Verbindung der allgemeinen Formel (I) Diphenylethylen, ein Alkoxydiphenylethylen, Dinaphthalinethylen, 4,4-Vinylidenbis(N,N-dimethylanilin), 4,4-Vinylidenbis(1-aminobenzol), cis-Stilben, trans-Stilben, α-Phenylacrylsäuremethylester, α-Phenylmethacrylsäuremethylester, α-Phenylacrylnitril, α-Phenylmethacrylnitril oder ein Gemisch aus zwei oder mehr davon eingesetzt wird.

5. Verfahren nach einem der Ansprüche 1 bis 4, wobei das Reaktionsgemisch als ein erstes Monomeres (a) Styrol, Acryl- oder Methacrylsäure, ein C₁- bis C₄-Alkyl- oder -hydroxyalkylacrylat oder -methacrylat, Vinylacetat, ein substituiertes oder unsubstituiertes Vinylpyrrolidon, ein Gemisch aus zwei oder mehr davon, oder ein Gemisch aus einem solchen ersten Monomeren (a) mit mindestens einem weiteren radikalisch homo- oder copolymerisierbaren Monomeren umfaßt.

6. Verfahren nach einem der Ansprüche 1 bis 5, **dadurch gekennzeichnet, daß** während der Umsetzung 5 Gew.-% Wasser oder weniger im Reaktionsgemisch vorliegen.

7. Verfahren zur Herstellung eines Polymeren (B), bei dem als Stufe
(ii) das in Stufe (i) erhaltene Umsetzungsprodukt (A) nach Anspruch 1 unter radikalischen Bedingungen in Gegenwart von mindestens einem, radikalisch homo- oder copolymerisierbaren Monomeren (b) umgesetzt wird.

8. Verfahren zur Herstellung eines Polymeren (C), bei dem als Stufe
(iii) das in Stufe (ii) erhaltene Umsetzungsprodukt (B) nach Anspruch 7 unter radikalischen Bedingungen in Gegenwart von mindestens einem, radikalisch homo- oder copolymerisierbaren Monomeren (c) umgesetzt wird, wobei diese Umsetzung gegebenenfalls mehrfach hintereinander mit gleichen oder verschiedenen Monomeren (c) wiederholt wird.

9. Umsetzungsprodukt (A), das mittels eines Verfahrens umfassend die folgende Stufe (i) herstellbar ist:
(i) Reaktion unter radikalischen Bedingungen eines Reaktionsgemischs, umfassend
- mindestens ein radikalisch polymerisierbares Monomeres (a),
- mindestens einen radikalischen Initiator, sowie
- eine Verbindung der Formel (I) 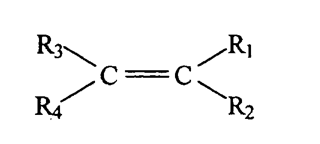 worin R₁ bis R₄ jeweils unabhängig voneinander für Wasserstoff, einen jeweils unsubstituierten oder substituierten Alkylrest, Cycloalkylrest, Aralkylrest, einen unsubstituierten oder einen substituierten aromatischen Kohlenwasserstoffrest stehen, mit der Maßgabe, daß mindestens zwei der Reste R₁ bis R₄ für einen unsubstituierten oder einen substituierten aromatischen Kohlenwasserstoffrest stehen,
wobei während Reaktion im Reaktionsgemisch 10 Gew.-% Wasser oder weniger vorliegen.

10. Polymeres (B) oder Polymeres (C), das durch ein Verfahren umfassend die Stufe (ii) oder die Stufe (ii) und die Stufe (iii) gemäß einem der Ansprüche 7 oder 8 herstellbar ist.

11. Polymeres (B) oder (C) nach Anspruch 10, mit folgender Struktur:
Poly(acrylsäure-b-styrol), Poly(methylmethacrylat-b-styrol), Poly(methacrylsäure-b-hydroxyethylacrylat), Poly(methacrylsäure- methylester-b-N-vinylpyrrolidon), Poly(methacrylsäuremethylester-b-N-vinylformamid), Poly(methacrylsäuremethylester-b-hydroxyethyl-acrylat), Poly(methacrylsäuremethylester-b-(styrol-stat-acrylnitril)), Poly(n-butylacrylat-b-styrol-b-n-butylacrylat), Poly(methylmethacrylat-b-styrol-b-methylmethacrylat-b-styrol), Poly(n-butylacrylat-b-styrol-b-n-butylacrylat-b-styrol).

## Claims

1. A process for the preparation of a reaction product (A), which comprises the following stage (i) :
(i) Reaction, under free radical conditions, of a reaction mixture comprising
- at least one monomer (a) capable of free radical polymerization,
- at least one free radical initiator and
- a compound of the formula (I) 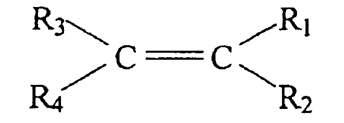 where R₁ to R₄, independently of one another, are each hydrogen, an alkyl radical, cycloalkyl radical or aralkyl radical, each of which is unsubstituted or substituted, an unsubstituted or substituted aromatic hydrocarbon radical, with the proviso that at least two of the radicals R₁ to R₄ are an unsubstituted or substituted aromatic hydrocarbon radical, or R¹ and R² or R³ and R⁴, in each case in pairs, are a substituted or unsubstituted aromatic hydrocarbon having 6 to 18 carbon atoms and a functional group which, in conjugation with the C-C double bond in the formula I, has a multiple bond between a carbon atom and a heteroatom,
10% by weight or less of water being present in the reaction mixture during the reaction.

2. A process as claimed in claim 1, the reaction being carried out at from 1 to 300 bar.

3. A process as claimed in either of claims 1 and 2, the amount of free radical initiator for the at least one monomer (a) being from 0.5 to 50% by weight, based on the total amount of the initiator and of the monomer (a).

4. A process as claimed in any of claims 1 to 3, diphenylethylene, an alkoxydiphenylethylene, dinaphthylethylene, 4,4-vinylidenebis(N,N-dimethylaniline), 4,4-vinylidenebis(1-aminobenzene), cis-stilbene, trans-stilbene, methyl α-phenylacrylate, methyl α-phenylmethacrylate, α-phenylacrylonitrile, α-phenylmethacrylonitrile or a mixture of two or more thereof being used as the compound of the formula (I).

5. A process as claimed in any of claims 1 to 4, the reaction mixture comprising, as a first monomer (a), styrene, acrylic acid or methacrylic acid, a C₁- to C₄-alkyl or C₁-C₄-hydroxyalkyl acrylate or methacrylate, vinyl acetate, a substituted or unsubstituted vinylpyrrolidone, a mixture of two or more thereof, or a mixture of one such first monomer (a) with at least one further monomer capable of free radical homopolymerization or copolymerization.

6. A process as claimed in any of claims 1 to 5, wherein 5% by weight or less of water are present in the reaction mixture during the reaction.

7. A process for the preparation of a polymer (B), in which, as stage
(ii) the reaction product (A) obtained in stage (i) as claimed in claim 1 is reacted under free radical conditions in the presence of at least one monomer (b) capable of free radical homopolymerization or copolymerization.

8. A process for the preparation of a polymer (C), in which, as stage
(iii) the reaction product (B) obtained in stage (ii) as claimed in claim 7 is reacted under free radical conditions in the presence of at least one monomer (c) capable of free radical homopolymerization or copolymerization, this reaction being repeated, if required, several times in succession with the same or different monomers (c).

9. A reaction product (A) which can be prepared by means of a process comprising the following stage (i) :
(i) Reaction, under free radical conditions, of a reaction mixture comprising
- at least one monomer (a) capable of free radical polymerization,
- at least one free radical initiator and
- a compound of the formula (I) 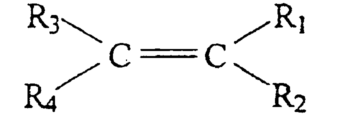 where R₁ to R₄, independently of one another, are each hydrogen, an alkyl radical, cycloalkyl radical or aralkyl radical, each of which is unsubstituted or substituted, an unsubstituted or substituted aromatic hydrocarbon radical, with the proviso that at least two of the radicals R₁ to R₄ are an unsubstituted or substituted aromatic hydrocarbon radical,
10% by weight or less of water being present in the reaction mixture during the reaction.

10. A polymer (B) or polymer (C) which can be prepared by a process comprising stage (ii) or stage (ii) and stage (iii) as claimed in either of claims 7 and 8.

11. A polymer (B) or (C) as claimed in claim 10, having the following structure:
Poly(acrylic acid-b-styrene), poly(methyl methacrylate-b-styrene), poly(methacrylic acid-b-hydroxyethyl acrylate), poly(methyl methacrylate-b-N-vinylpyrrolidone), poly(methyl methacrylate-b-N-vinylformamide), poly(methyl methacrylate-b-hydroxyethyl acrylate), poly(methyl methacrylate-b-(styrene-stat-acrylonitrile)), poly(n-butyl acrylate-b-styrene-b-n-butyl acrylate), poly(methyl methacrylate-b-styrene-b-methyl methacrylate-b-styrene), poly(n-butyl acrylate-b-styrene-b-n-butyl acrylate-b-styrene).

## Revendications

1. Procédé pour la préparation d'un produit de réaction (A), comprenant le stade opératoire (i) suivant :
(i) réaction dans des conditions radicalaires d'un mélange de réaction comprenant :
- au moins un monomère (a) apte à la polymérisation radicalaire,
- au moins un inducteur radicalaire et
- un composé de formule I 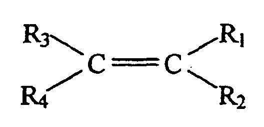 dans laquelle R₁ à R₄ représentent chacun, indépendamment les uns des autres, l'hydrogène, un groupe alkyle, cycloalkyle, aralkyle, chacun d'eux substitué ou non, un radical hydrocarboné aromatique substitué ou non, sous réserve qu'au moins deux des symboles R₁ à R₄ représentent chacun au moins un radical hydrocarboné aromatique substitué ou non, ou bien R¹ et R² d'une part, ou R³ ou R⁴, d'autre part, représentent ensemble un radical hydrocarboné aromatique substitué ou non contenant 6 à 18 atomes de carbone et un groupe fonctionnel qui, en conjugaison avec la double liaison C-C de la formule générale I, contient une liaison multiple entre un atome de carbone et un hétéroatome,
la quantité d'eau présente durant la réaction dans le mélange de réaction étant de 10 % en poids ou moins.

2. Procédé selon la revendication 1, dans lequel la réaction est réalisée à une pression de 1 à 300 bar.

3. Procédé selon l'une des revendications 1 ou 2, dans lequel la proportion de l'inducteur radicalaire, par rapport au(x) monomère(s) (a), représente 0,5 à 50 % du poids total de l'inducteur et du ou des monomères (a).

4. Procédé selon l'une des revendications 1 à 3, dans lequel le composé de formule générale I mis en oeuvre est le diphényléthylène, un alcoxydiphényléthylène, un dinaphtalène-éthylène, la 4,4-vinylidène-bis-(N,N-diméthylaniline), le 4,4-vinylidène-bis-(1-aminobenzène), le cis-stilbène, le trans-stilbène, l'alpha-phénylacrylate de méthyle, l'alpha-phénylméthacrylate de méthyle, l'alpha-phénylacrylonitrile, l'alpha-phénylméthacrylonitrile ou un mélange de deux ou plusieurs d'entre eux.

5. Procédé selon l'une des revendications 1 à 4, dans lequel le mélange de réaction comprend en tant que premier monomère (a) le styrène, l'acide acrylique ou méthacrylique, un acrylate ou méthacrylate d'alkyle ou d'hydroxyalkyle en C1-C4, l'acétate de vinyle, une vinylpyrrolidone substituée ou non, un mélange de deux ou plusieurs d'entre eux, ou un mélange d'un tel premier monomère (a) et d'au moins un autre monomère apte à l'homopolymérisation ou à la copolymérisation radicalaire.

6. Procédé selon l'une des revendications 1 à 5, **caractérisé en ce que**, dans le cours de la réaction, le mélange de réaction contient 5 % en poids d'eau au moins.

7. Procédé pour la préparation d'un polymère (B) dans lequel, au stade (ii) on fait réagir le produit de réaction (A) obtenu au stade (i) dans des conditions radicalaires en présence d'au moins un monomère (b) apte à l'homopolymérisation ou à la copolymérisation radicalaire.

8. Procédé pour la préparation d'un polymère (C) dans lequel, au stade (iii) on fait réagir le produit de réaction (B) obtenu au stade (ii) dans des conditions radicalaires en présence d'au moins un autre monomère (c) apte à l'homopolymérisation à la copolymérisation radicalaire, cette réaction étant éventuellement répétée à plusieurs reprises avec des monomères (c) identiques ou différents.

9. Produit de réaction (A) préparé par un procédé comprenant le stade opératoire (i) suivant:
(i) réaction dans des conditions radicalaires d'un mélange de réaction comprenant
- au moins un monomère (a) apte à la polymérisation radicalaire,
- au moins un inducteur radicalaire et
- un composé de formule I 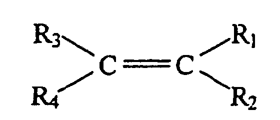
dans laquelle R₁ à R₄ représentent chacun, indépendamment les uns des autres, l'hydrogène, un groupe alkyle, cycloalkyle, aralkyle, chacun d'eux substitué ou non, un radical hydrocarboné aromatique substitué ou non, sous réserve qu'au moins deux des symboles R₁ à R₄ représentent un radical hydrocarboné aromatique substitué ou non, la teneur en eau du mélange de réaction en cours de réaction étant de 10 % en poids au moins.

10. Polymère (B) ou polymère (C) préparé par un procédé comprenant le stade opératoire (ii) ou le stade opératoire (ii) et le stade préparatoire (iii) selon une des revendications 6 ou 8.

11. Polymère (B) ou (C) selon la revendication 10, à l'une des structures suivantes :
poly-(acide acrylique-b-styrène), poly-(méthacrylate de méthyle-b-styrène), poly-(acide méthacrylique-b-acrylate d'hydroxyéthyle), poly-(méthacrylate de méthyle-b-N-vinylpyrrolidone), poly-(méthacrylate de méthyle-b-N-vinylformamide), poly-(méthacrylate de méthyle-b-acrylate d'hydroxyéthyle), poly-(acrylate de n-butyle-b-styrène-b-acrylate de n-butyle), poly-(méthacrylate de méthyle-b-mstyrène-b-méthacrylate de méthyle-b-styrène), poly-(acrylate de n-butyle-b-styrène-b-acrylate de n-butyle-b-styrène).
